# EUROPEAN PATENT APPLICATION

(11) **EP 4 151 549 A1**
(43) Date of publication of application: **22.03.2023**
(21) Application number: 21197051.2
(22) Date of filing: 16.09.2021
(51) Int. Cl.: B65D 33/01, B65D 77/22, B65D 75/58

(54) **VENT AND CONTAINER INCLUDING A VENT**

(71) Applicant: W. L. Gore & Associates GmbH, 85640 Putzbrunn (DE)
(72) Inventor: Keglmeier, Daniel, 85640 Putzbrunn (DE); Killer, Anton, 85640 Putzbrunn (DE); Gruber, Andreas, 85640 Putzbrunn (DE)
(74) Representative: HGF

(57) **Abstract**

There is presented herein a closed container comprising at least one container wall, a seam connecting two edges of the at least one container wall and a vent, wherein at least a portion of the seam is formed around the vent.

## Description

### Field

The disclosure relates to vents and containers including a vent, specifically vents and flexible containers including a vent.

### Background

Vents and vent assemblies can be used to reduce pressure fluctuations within closed containers and to control humidity. Such vents and vent devices must also prevent ingress of dirt and other contaminants, and to also prevent the ingress of water.

Closed containers used to retain a liquid require the vent or vent assembly to prevent leakage of the liquid retained therein whilst also ensuring that any gas generated within the closed container is allowed to escape through the vent to prevent pressure build up within the closed container.

Example closed containers that are used to retain a liquid include battery pouches that retain battery electrolyte. Typical battery pouches are made from flexible materials and include one or more vents in a wall of the battery pouch. Accordingly, gas generated during use from the battery electrolyte is able to escape the battery pouch to ensure that the pressure within the battery pouch does not rise sufficiently to ensure that the battery pouch does not burst or otherwise leak, or loses capacity due to the increase in pressure.

However, the use of a vent in a closed container wall requires the provision of an aperture within the closed container wall, which can become a weak point if stress is applied to the closed container. This potential issue is exaggerated more if the walls of the closed container are flexible, where the provision of an aperture could lead to a tear or rip of the material of the wall of the closed container.

Accordingly, there remains a need for improved venting assemblies for use with electronics housings.

Therefore, at least some embodiments are directed to the provision of improved vent assemblies that solve at least one of these problems.

### Summary

According to a first aspect there is provided a closed container comprising at least one container wall, a seam connecting two edges of the at least one container wall, and a vent, wherein at least a portion of the seam is formed around the vent.

A closed container where a seam is formed around the vent allows the interior of the closed container to be vented to the exterior of the closed container such that the pressure between the interior of the closed container and the exterior of the closed container may be substantially equalised without requiring an aperture to be provided within the at least one container wall.

The provision of an aperture within at least one container wall can provide a weak point within that at least one container wall. Accordingly, a closed container according to the first aspect does not require an aperture to be formed in the at least one container wall and therefore maintains the structural integrity of the closed container. The provision of a vented closed container that does not require the formation of an aperture within the at least one container wall is particularly important in embodiments where the closed container is to be used to retain a liquid to ensure that the closed container does not leak.

The closed container may comprise a single continuous container wall. The single continuous container wall may comprise a first portion comprising a first edge of the single continuous container wall and a second portion comprising a second edge of the single continuous container wall. The seam may comprise the first portion and the second portion of the single continuous container wall to thereby seal the closed container.

The closed container may comprise a plurality of container walls. The plurality of container walls may comprise a first container wall and a second container wall and the seam may comprise an edge of the first container wall and an edge of a second container wall to thereby seal the closed container.

The closed container may comprise a single seam. The closed container may comprise more than one seam. For example, the closed container may comprise two walls, three walls, four walls or more.

In embodiments comprising a plurality of container walls, the plurality of container walls may comprise at least two container walls that connect seamlessly along at least one edge and the single seam extends around the remaining edges between the at least two container walls.

The plurality of container walls may be adhered together along at least one edge to form the seam. The plurality of container walls may be welded together along at least one edge to form the seam. The plurality of container walls may be thermally welded together or impulse welded together or welded together using another method of welding. The method of adhering or welding the plurality of container walls along the at least one edge may be dependent on the type of material forming the plurality of container walls.

The seam may be substantially gas tight. Accordingly, substantially the only way for gas to pass from the interior of the closed container to the exterior of the closed container is via the vent.

As used herein, the term "gas tight" refers to a closed container or a seam that does not allow gas to pass through the walls of the closed container or the seam or does not substantially allow gas to pass through the walls of the closed container or the seam. For example, a gas tight closed container that is substantially gas tight may allow less than 0.1 bar/hour, less than 0.07 bar/hour, less than 0.05 bar/hour, less than 0.02 bar/hour or less than 0.01 bar/hour to escape from the interior of the closed container to the exterior of the closed container. The closed container may allow from 0.1 bar/hour to 0.005 bar/hour. The closed container may allow from 0.1 bar/hour to 0.01 bar/hour.

The closed container may be substantially burst resistant. For example, the closed container may have a burst resistance of greater than 0.1 MPa, greater than 0.2 MPa, greater than 0.3 MPa, greater than 0.4 MPa, greater than 0.5 MPa, greater than 0.6 MPa, greater than 0.7 MPa, greater than 0.8 MPa, greater than 0.9 MPa, or greater than 1.0 MPa. The closed container may have a burst resistance from about 0.1 MPa to about 1.5 MPa. The closed container may have a burst resistance from about 0.1 MPa to about 1.0 MPa.

At least one container wall within the plurality of container walls may be a flexible container wall. The flexible container wall may comprise a polymer material. The flexible container wall may comprise polypropylene (PP), polyamide (PA), or polybutylene terephthalate (PBT), polyethylene (PE), or polyethylene terephthalate (PET). At least one container wall within the plurality of container walls may comprise a metallic material. The at least one container wall may comprise aluminium. The at least one container wall may comprise aluminium foil, for example.

The at least one container wall may comprise a laminate material. The laminate material may comprise at least one polymer layer. The laminate material may comprise at least one metallic layer. The laminate material may comprise at least one polymer layer and at least one metallic layer. The laminate material may comprise a first polymer layer, a metallic layer and a second polymer layer. The metallic layer may be located between the first polymer layer and the second polymer layer.

The closed container may be a pouch.

The closed container may be a battery pouch. The closed container may be configured to retain battery fluid that allows the transfer of ions from a first electrode to a second electrode through the battery fluid. Accordingly, the closed container may retain at least two electrodes and at least two electrical contacts that are configured to connect the at least two electrodes to an external electrical circuit. The at least one container wall may be configured to be substantially impervious to the fluid that is retained within the closed container. For example, the battery pouch may be a lithium (Li) ion pouch cell

At least one container wall within the plurality of container walls may be a rigid container wall. The rigid container wall may comprise a rigid polymer material. The rigid container wall may comprise a thermoplastic material. The rigid container wall may comprise a reinforced thermoplastic material. For example, the rigid container wall may comprise a thermoplastic material such as polypropylene (PP), polyethylene (PE), polybutylene terephthalate (PBT), or polyethylene terephthalate (PET) reinforced with a fiber such as glass fiber or similar. The rigid container may comprise a rigid metallic material. The rigid container wall may comprise aluminium, steel, stainless steel, copper, brass, bronze, tin or lead, for example.

The vent may comprise a vent material, at least one opening and at least one connecting surface that secures the vent within the seam, wherein the at least one opening and vent material form a gas conduit such that during use gas passes from the interior of the closed container to the exterior of the closed container through the gas conduit.

The vent material may comprise a polymer material. The polymer material may be selected from the group consisting of polyethylene (PE), polyethylene terephthalate (PET), or a fluoropolymer such as polytetrafluoroethylene (PTFE) or fluorinated ethylene propylene (FEP).

The vent material may comprise an expanded polymer material. The expanded polymer material may be selected from the group consisting of expanded PE (ePE), expanded PET (ePET), or an expanded fluoropolymer such as expanded PTFE (ePTFE) or expanded FEP (eFEP).

The vent material may comprise a dense polymer material. The dense polymer material may be selected from the group consisting of dense PE, dense PET, or dense fluoropolymer such as dense PTFE or dense FEP.

The vent material may comprise a densified expanded polymer material. The densified expanded polymer material may be selected from the group consisting of densified ePE, densified ePET, or densified expanded fluoropolymer such as densified ePTFE or densified eFEP.

The term "densified expanded polymer material" as used herein refers to an expanded polymer material that has been densified after the material has been expanded.

A dense or densified material typically is a material that has a reduced porosity when compared to the non-densified or non-dense material.

The vent material may be a porous material. The vent material may be sufficiently porous to allow the flow of gas through the vent material to allow gas generated within the closed container to pass out of the closed container through the vent material of the vent. Accordingly, the vent material may allow gas flow or airflow across the vent material.

The vent material may be configured to allow diffusion of gas through the vent material. The vent material may comprise pores that allow gas to diffuse through the vent material. The pores may be sized such that they allow gas to diffuse through the vent material but are sufficiently small to prevent a flow of gas through the vent material. The vent material may be structured such that the gas must take an indirect route through the vent material.

The vent may comprise a first connecting surface. The first connecting surface may connect the vent to the seam. The vent may comprise a second connecting surface. The second connecting surface may connect the vent to the seam. The second connecting surface may be on an opposed side of the vent to the first connecting surface

The vent may be impermeable to liquid. Accordingly, the vent may allow the passage of gas through the gas conduit and not allow the passage of liquid.

The vent material may form a pocket. An opening of the at least one opening may be an opening of the pocket. The pocket may be formed within the vent material. The gas conduit may extend from the opening through the vent material via the pocket.

As used herein, the term "pocket" refers to a gap or opening between surfaces of the vent material. The gap or opening typically extends from the at least one opening through the width of the seam into the interior of the closed container.

The pocket may extend into the closed container from the seam.

The vent material may comprise a membrane. The vent material may comprise a film. The vent material may be folded over itself to form the pocket. Accordingly, the vent material may form a first side of the pocket, a second side of the pocket and a third side of the pocket. The first side of the pocket may be on an opposite side of the pocket to the second side. The third side of the pocket may correspond to the portion of the vent material forming the fold where the vent material is folded over itself. The first side of the pocket and the second side of the pocket may be connected together with the pocket extending between them. The first side of the pocket and the second side of the pocket may be adhered together. The first side of the pocket and the second side of the pocket may be welded together.

The vent material may be supported on a flexible substrate. The flexible substrate may connect the vent material to the seam. In embodiments where the vent material comprises a dense polymer or a densified expanded polymer, the flexible substrate may allow the vent material to be more readily and more securely connected to the seam.

The flexible substrate may comprise a more open structure than the vent material. The flexible substrate may be configured to ensure that the passage of gas from the interior of the closed container to the exterior of the closed container is not impeded.

The vent may comprise a laminate. The laminate may comprise a plurality of layers. At least one layer within the plurality of layers may be a layer of venting material. At least one layer within the plurality of layers may be a layer of a flexible substrate. At least one layer within the plurality of layers may be an intermediate layer. The intermediate layer may be between the layer of venting material and the layer of a flexible substrate. The intermediate layer may allow the layer of venting material to be connected more readily to the layer of a flexible substrate. For example, the intermediate layer may adhere the venting material to the layer of a flexible substrate.

The laminate may comprise at least three layers. The laminate may comprise at least four layers. The laminate may comprise at least five layers. The laminate may comprise at least six layers. The laminate may comprise at least seven layers. The laminate may comprise from two layers to seven layers. The laminate may comprise from three layers to five layers. For example, the laminate may comprise three layers, four layers or five layers.

In some embodiments, the laminate may comprise a layer of venting material, a first layer of flexible substrate and a second layer of flexible substrate. The layer of venting material may be provided between the first layer of flexible substrate and the second layer of flexible substrate.

In some embodiments, the laminate may comprise a layer of venting material, a first layer of flexible substrate, a second layer of flexible substrate, a first intermediate layer and a second intermediate layer. The layer of venting material may be provided between the first intermediate layer and the second intermediate layer. The first layer of flexible substrate may be provided on the first intermediate layer on the side opposed to the side connected to the venting layer. The second layer of flexible substrate may be provided on the second intermediate layer on the side opposed to the side connected to the layer of venting material.

The first layer of flexible substrate and/or the second layer of flexible substrate may comprise a material that is more porous than the layer of venting material. In some embodiments, the first layer of flexible substrate and/or the second layer of flexible substrate may comprise a more porous form of the venting material of the layer of the venting material. In some embodiments, the first layer of flexible substrate and/or the second layer of flexible substrate may comprise a different material to the layer of venting material.

The or each intermediate layer may comprise a fluoropolymer. In embodiments where the layer of venting material comprises a fluoropolymer, the or each intermediate layer may comprise a fluoropolymer that is different to the fluoropolymer of the layer of venting material. The or each intermediate layers may comprise FEP, terpolymer of tetrafluoroethylene, hexafluoropropylene and vinylidene fluoride (THV) or perfluoroalkoxy alkane (PFA). For example, the or each intermediate layers may comprise FEP.

In embodiments where the vent material forms a pocket, the pocket may be formed by folding the laminate over itself to form the pocket. Accordingly, in embodiments comprising a first layer of flexible substrate and a second layer of flexible substrate, the first layer of flexible substrate may form the exterior of the pocket and the second layer of flexible substrate may form the interior of the pocket. The first layer of flexible substrate may connect the vent formed by the pocket into the seam. Accordingly, the first layer of flexible substrate may be configured to form a secure and sealed connection between the vent and the seam.

In embodiments comprising an intermediate layer, the intermediate layer may be configured to allow the layer of venting material to be connected more securely to a layer of the flexible substrate.

The layer of the flexible substrate may extend beyond the layer of venting material.

The opening of the pocket may open to the exterior of the closed container. The opening of the pocket may open to the interior of the closed container.

During use, gas generated within the closed container may pass through the vent material into the pocket and then pass through the opening of the pocket to the exterior of the closed container.

The length of the pocket may be configured to control the rate of diffusion or gas flow through the vent from the interior of the closed container to the exterior of the closed container. The length of the pocket extending into the interior of the closed container may be configured to control the rate of diffusion or gas flow through the vent from the interior of the closed container to the exterior of the closed container. Accordingly, a higher rate of diffusion or a higher rate of gas flow through the vent may be provided by a longer pocket to thereby provide a higher surface area of vent material exposed to the interior of the closed container. A lower rate of diffusion or a lower rate of gas flow through the vent may be provided by a shorter pocket to thereby provide a lower surface are of vent material exposed to the interior of the closed container.

The width of the pocket may be configured to control the rate of diffusion or gas flow through the vent from the interior of the closed container to the exterior of the closed container. The width of the pocket extending along the seam of the closed container may be configured to control the rate of diffusion or rate of gas flow through the vent from the interior of the closed container to the exterior of the closed container. Accordingly, a higher rate of diffusion or a higher rate of gas flow through the vent may be provided by a wider pocket to thereby provide a higher surface area of vent material exposed to the interior of the closed container. A lower rate of diffusion or a lower rate of gas flow through the vent may be provided by a narrower pocket to thereby provide a lower surface area of vent material exposed to the interior of the closed container.

The vent material may comprise at least two connecting surfaces and the at least two connecting surfaces may comprise a first connecting surface on a first side of the vent material and a second connecting surface on a second side of the vent material, wherein the first side is an opposed side of the vent material to the second side. The at least two connecting surfaces may be configured to connect the vent material to the at least one container wall. Accordingly, the at least two connecting surfaces may secure the vent into the seam. The at least two connecting surfaces may seal the vent within the seam to ensure that the only pathway for gas to pass from the interior of the closed container to the exterior of the closed container is through the vent.

The first connecting surface may comprise an asymmetrical connection between the vent material and a first surface of the seam.

The second connecting surface may comprise an asymmetrical connection between the vent material and a second surface of the seam.

As used herein, the term "asymmetrical connection" refers to a connection that is provided on a surface that has at least one discontinuity in the connecting surface such that the connection is asymmetrical in at least one plane. For example, the connection may be asymmetrical in a plane dividing the front of the vent material (i.e. the portion of the vent material adjacent to the exterior of the closed container) from the back of the vent material (i.e. the portion of the vent material adjacent to the interior of the closed container).

The asymmetrical connection between the vent material and the second surface of the seam may partially overlap with the asymmetrical connection between the vent material and the first surface of the seam.

The first side of the vent material may comprise a non-connecting portion. Accordingly, there may be a portion of the first side of the vent material that is not connected to the at least one container wall. A first channel may be formed between the first side of the vent material and the at least one container wall. The first channel may correspond to the non-connecting portion of the first side of the vent material. The first channel may be bounded by the first connecting surface on at least one side. The first channel may be bounded by the first connecting surface on at least two sides. The first channel may be bounded by the first connecting surface on at least three sides.

The second side of the vent material may comprise a non-connecting portion. Accordingly, there may be a portion of the second side of the vent material that is not connected to the at least one container wall. A second channel may be formed between the second side of the vent material and the at least one container wall. The second channel may correspond to the non-connecting portion of the second side of the vent material. The second channel may be bounded by the second connecting surface on at least one side. The second channel may be bounded by the second connecting surface on at least two sides. The second channel may be bounded by the second connecting surface on at least three sides.

In embodiments where a first channel is formed between the first side of the vent material and the at least one container wall and a second channel is formed between the second side of the vent material and the at least one container wall, the first channel may extend from an opening adjacent to the exterior of the closed container towards the interior of the closed container. The second channel may extend from an opening adjacent to the interior of the closed container toward the exterior of the closed container.

The first connecting surface may be provided adjacent to the interior of the closed container. The non-connecting portion of the first side of the vent material may be provided adjacent to the exterior of the closed container.

The first connecting surface may be provided adjacent to the exterior of the closed container. The non-connecting surface of the first side of the vent material may be provided adjacent to the interior of the closed container.

The second connecting surface may be provided adjacent to the interior of the closed container. The non-connecting portion of the second side of the vent material may be provided adjacent to the exterior of the closed container.

The second connecting surface may be provided adjacent to the exterior of the closed container. The non-connecting surface of the second side of the vent material may be provided adjacent to the interior of the closed container.

The first connecting surface may comprise two side portions running along opposed edges and substantially extending from an edge of the first side of the vent material adjacent to the exterior of the closed container ("first exterior edge") to an edge of the vent material adjacent to the interior of the closed container ("first interior edge"). The first connecting surface may comprise a cross-portion that extends between the two side portions. The cross-portion may seal and separate the interior of the closed container from the exterior of the closed container. The cross-portion may be located adjacent to the first interior edge. The cross-portion may be located adjacent to the first exterior edge. Accordingly, the first connecting surface may form a "U-shape", for example. The cross-portion may be located part way between the first exterior edge and the first interior edge. The cross-portion may be located closer to the first interior edge than the first exterior edge. The cross-portion may be located closer to the first exterior edge than the first interior edge. The cross-portion may be located 90%, 80%, 70%, or 60% of the way from the first exterior edge to the first interior edge or values therebetween. The cross-portion may be located from 60% to 100% of the way from the first exterior edge to the first interior edge, wherein 100% of the way from the first exterior edge corresponds to being located at the first interior edge.

The second connecting surface may comprise two side portions running along opposed edges and substantially extending from an edge of the second side of the vent material adjacent to the exterior of the closed container ("second exterior edge") to an edge of the second side of the vent material adjacent to the interior of the closed container ("second interior edge"). The second connecting surface may comprise a cross-portion that extends between the two side portions. The cross-portion may seal and separate the interior of the closed container from the exterior of the closed container. The cross-portion may be located adjacent to the second interior edge. The cross-portion may be located adjacent to the second exterior edge. Accordingly, the second connecting surface may form a "U-shape", for example. The cross-portion may be located part way between the second exterior edge and the second interior edge. The cross-portion may be located closer to the second interior edge than the second exterior edge. The cross-portion may be located closer to the second exterior edge than the second interior edge. The cross-portion may be located 90%, 80%, 70%, or 60% of the way from the second interior edge to the second exterior edge or values therebetween. The cross-portion may be located from 60% to 100% of the way from the second interior edge to the second exterior edge, wherein 100% of the way from the second interior edge corresponds to being located at the second exterior edge.

In some embodiments, the cross-portion of first connecting surface may be oriented in an opposite sense to the cross-portion of the second connecting surface. For example, the cross-portion of the first connecting surface may be provided adjacent to or at the first exterior edge and the cross-portion of the second connecting surface may be provided adjacent to or at the second interior edge. The provision of a first channel and a second channel formed by a first connecting surface and a second connecting surface provides a greater surface area of the vent material that is available for gas to diffuse or flow into the vent material, whilst maintaining a seal within the seam between the vent material and the at least one container wall.

It has been found that the provision of a greater surface area of vent material that is available for gas diffusion within the vent within the seam of a closed container enhances the efficiency of the vent and allows the size of the vent to be minimised for a given required minimum rate of gas diffusion.

It has further been found that the provision of available surface area of vent material that is on a first side of the vent material and on the second side of the vent material increases the available pathways through the vent material that gas can take to pass from the interior of the closed container to the exterior of the closed container.

The first connecting surface may comprise adhesive and may adhere the vent material to the at least one container wall. The first connecting surface may comprise a welded surface that has welded the vent material to the at least one container wall. The first connecting surface may be a modified portion of the surface of the first side of the vent material that has been modified to change the properties of the first connecting surface. The first connecting surface may have a greater surface roughness than non-modified surfaces of the vent material. The first connecting surface may be more porous than non-modified surfaces of the vent material. The first connecting surface may be configured to be more readily adhered, welded or otherwise connected to the at least one container wall.

The second connecting surface may comprise adhesive and may adhere the vent material to the at least one container wall. The second connecting surface may comprise a welded surface that has welded the vent material to the at least one container wall. The second connecting surface may be a modified portion of the surface of the second side of the vent material that has been modified to change the properties of the second connecting surface. The second connecting surface may have a greater surface roughness than non-modified surfaces of the vent material. The second connecting surface may be more porous than non-modified surfaces of the vent material. The second connecting surface may be configured to be more readily adhered, welded or otherwise connected to the at least one container wall.

The first connecting surface may mirror the second connecting surface.

In some embodiments the vent may comprise a vent body. The vent body may comprise at least one opening. The vent body may comprise the at least one opening of the vent. The vent body may comprise at least one connecting surface to connect the vent to the at least one container wall in the seam. The vent body may house the vent material. Accordingly, the gas conduit may extend through the vent body.

The vent body may provide addition mechanical strength to the vent. The vent body may define the gas conduit. The vent body may comprise at least one interior opening adjacent to the interior of the closed container, and at least one exterior opening adjacent to the exterior of the closed container. Accordingly, gas may be required to pass through the at least one interior opening, through the vent material and through the at least one exterior opening.

The vent body may comprise a venting aperture. The venting aperture may correspond to one of the at least one opening of the vent body. The venting aperture may extend beyond the seam. The portion of the vent body comprising the venting aperture may extend beyond the seam. The portion of the vent body comprising the venting aperture may extend beyond the seam into the interior of the closed container. The portion of the vent body comprising the venting aperture may extend beyond the seam to the exterior of the closed container. The venting aperture may have a major plane. The venting aperture may be oblong, rectangular, or square in shape. The venting aperture may be curved. The venting aperture may be circular, or elliptical. The shape of the venting aperture may define the major plane of the venting aperture. The vent material may extend across the venting aperture. The vent material may span the venting aperture. For example, the vent material may be a vent membrane that extends across the venting aperture. The vent material may comprise a laminate material as described above.

The vent body may comprise a major plane. A portion of the vent body may comprise a major plane. The major plane of the vent body or portion of the vent body may coincide or be parallel with a major plane of the seam. The major plane of the venting aperture may be arranged within the major plane of the vent body or a plane parallel to the major plane of the vent body. The major plane of the venting aperture may be arranged substantially perpendicular to the major plane of the vent body. The major plane of the venting aperture may be arranged at an angle between the major plane of the vent body and perpendicular to the major plane of the vent body.

The vent body may comprise a connecting portion that connects the venting aperture to the portion of the vent body comprising the major plane. The gas conduit may extend from the at least one opening to the venting aperture via the portion of the vent body comprising the major plane and the connecting portion.

The at least one interior opening may be offset from the at least one exterior opening. The at least one interior opening may be offset from the at least one exterior opening in at least one dimension. The at least one interior opening may be offset from the at least one exterior opening in at least 2 dimensions. The at least one interior opening may be offset vertically from the at least one exterior opening. The at least one interior opening may be offset horizontally from the at least one exterior opening. The at least one interior opening may be offset vertically and horizontally from the at least one exterior opening. As used herein, the term "vertically" refers to the direction perpendicular to the major plane of the vent body. The term "horizontally" refers to a direction within the major plane of the vent body or within a plane that is parallel to the major plane of the vent body. Accordingly, gas passing through the vent may be required to change the direction of flow at least once from the at least one interior opening to the at least one exterior opening. The gas conduit from the at least one interior opening to the at least one exterior opening may require the direction of flow to change at least once. Accordingly, the vent may prevent a linear flow of gas through the vent material and thereby require the gas to pass through a higher volume of vent material.

The vent body may comprise a central portion, a first tapered portion and a second tapered portion. The central portion may be located between the first tapered portion and the second tapered portion. The first tapered portion may be configured to gradually reduce the thickness of the vent body away from the central portion. The second tapered portion may be configured to gradually reduce the thickness of the vent body away from the central portion. Accordingly, the vent body may be configured to allow a secure seal to be more readily formed within the seam between the vent body and the two portions of the at least one wall. The vent body may be retained more securely within the seam of the closed container and may facilitate a tighter seal between the at least one container wall and the vent within the seam and between both portions of the at least one container wall either side of the vent within the seam.

The first tapered portion and/or the second tapered portion may taper on one side. The first tapered portion and/or the second tapered portion may taper on two sides. The first tapered portion and/or the second tapered portion may taper on two opposed sides.

The vent material may be located between the at least one interior opening and the at least one exterior opening. The vent body may comprise a central cavity. The central cavity may be located between the at least one interior opening and the at least one exterior opening.

The central cavity may connect the at least one interior opening to the at least one exterior opening. The vent material may span the central cavity. Accordingly, gas flowing or diffusing from the at least one interior opening to the at least one exterior opening may be forced to pass through the vent material within the central cavity.

The vent may not extend beyond the seam into the interior of the closed container. The vent may not extend beyond the seam into the exterior of the closed container. In some embodiments, the vent may be retained wholly within the seam such that the vent does not extend into the interior of the closed container and does not extend to the exterior of the closed container.

In a second aspect there is provided a vent comprising a vent material, at least one opening and at least one connecting surface, wherein the vent is configured to be mounted within the seam of a closed container having an interior and an exterior such that the at least one opening is adjacent to the exterior of the closed container and the at least one connecting surface is configured to connect the vent into the seam, wherein the at least one opening and vent material form a gas conduit such that during use when the vent is installed within the seam of a closed container gas passes from the interior of the closed container to the exterior of the closed container through the gas conduit.

The vent material may comprise a polymer material. The polymer material may be selected from the group consisting of polyethylene (PE), polyethylene terephthalate (PET), or a fluoropolymer such as polytetrafluoroethylene (PTFE) or fluorinated ethylene propylene (FEP).

The vent material may comprise an expanded polymer material. The expanded polymer material may be selected from the group consisting of expanded PE (ePE), expanded PET (ePET), or an expanded fluoropolymer such as expanded PTFE (ePTFE) or expanded FEP (eFEP).

The vent material may comprise a dense polymer material. The dense polymer material may be selected from the group consisting of dense PE, dense PET, or dense fluoropolymer such as dense PTFE or dense FEP.

The vent material may comprise a densified expanded polymer material. The densified expanded polymer material may be selected from the group consisting of densified ePE, densified ePET, or densified expanded fluoropolymer such as densified ePTFE or densified eFEP.

The vent material may be a porous material. The vent material may be sufficiently porous to allow the flow of gas through the vent material to allow gas to pass through the vent material of the vent. Accordingly, the vent material may allow gas flow or airflow across the vent material.

The vent material may be configured to allow diffusion of gas through the vent material. The vent material may comprise pores that allow gas to diffuse through the vent material. The pores may be sized such that they allow gas to diffuse through the vent material but are sufficiently small to prevent a flow of gas through the vent material. The vent material may be structured such that the gas must take an indirect route through the vent material.

The vent may comprise a first connecting surface. The first connecting surface may connect the vent to the seam when the vent is installed within the seam of a closed container. The vent may comprise a second connecting surface. The second connecting surface may connect the vent to the seam when the vent is installed within the seam of a closed container. The second connecting surface may be on an opposed side of the vent to the first connecting surface.

The vent may be impermeable to liquid. Accordingly, the vent may allow the passage of gas through the gas conduit and not allow the passage of liquid.

The vent material may form a pocket. An opening of the at least one opening may be an opening of the pocket. The pocket may be formed within the vent material. The gas conduit may extend from the opening through the vent material via the pocket.

As used herein, the term "pocket" refers to a gap or opening between surfaces of the vent material. When the vent is installed within the seam of a closed container, the gap or opening typically extends from the at least one opening through the width of the seam into the interior of the closed container.

The pocket may extend into the closed container from the seam when the vent is installed within the seam of a closed container.

The vent material may comprise a membrane. The vent material may comprise a film. The vent material may be folded over itself to form the pocket. Accordingly, the vent material may form a first side of the pocket, a second side of the pocket and a third side of the pocket. The first side of the pocket may be on an opposite side of the pocket to the second side. The third side of the pocket may correspond to the portion of the vent material forming the fold where the vent material is folded over itself. The first side of the pocket and the second side of the pocket may be connected together with the pocket extending between them. The first side of the pocket and the second side of the pocket may be adhered together. The first side of the pocket and the second side of the pocket may be welded together.

The vent material may be supported on a flexible substrate. The flexible substrate may connect the vent material to the seam when the vent is installed within the seam of a closed container. In embodiments where the vent material comprises a dense polymer or a densified expanded polymer, the flexible substrate may allow vent material to be more readily and more securely connected to the seam when the vent is installed within the seam of a closed container.

The flexible substrate may comprise a more open structure than the vent material. The flexible substrate may be configured to ensure that when the vent is installed within the seam of a closed container the passage of gas from the interior of the closed container to the exterior of the closed container is not impeded.

The vent may comprise a laminate. The laminate may comprise a plurality of layers. At least one layer within the plurality of layers may be a layer of venting material. At least one layer within the plurality of layers may be a layer of a flexible substrate. At least one layer within the plurality of layers may be an intermediate layer. The intermediate layer may be between the layer of venting material and the layer of a flexible substrate. The intermediate layer may allow the layer of venting material to be connected more readily to the layer of a flexible substrate. For example, the intermediate layer may adhere the venting material to the layer of a flexible substrate.

The laminate may comprise at least three layers. The laminate may comprise at least four layers. The laminate may comprise at least five layers. The laminate may comprise at least six layers. The laminate may comprise at least seven layers. The laminate may comprise from two layers to seven layers. The laminate may comprise from three layers to five layers. For example, the laminate may comprise three layers, four layers or five layers.

In some embodiments, the laminate may comprise a layer of venting material, a first layer of flexible substrate and a second layer of flexible substrate. The layer of venting material may be provided between the first layer of flexible substrate and the second layer of flexible substrate.

In some embodiments, the laminate may comprise a layer of venting material, a first layer of flexible substrate, a second layer of flexible substrate, a first intermediate layer and a second intermediate layer. The layer of venting material may be provided between the first intermediate layer and the second intermediate layer. The first layer of flexible substrate may be provided on the first intermediate layer on the side opposed to the side connected to the venting layer. The second layer of flexible substrate may be provided on the second intermediate layer on the side opposed to the side connected to the layer of venting material.

The first layer of flexible substrate and/or the second layer of flexible substrate may comprise a material that is more porous than the layer of venting material. In some embodiments, the first layer of flexible substrate and/or the second layer of flexible substrate may comprise a more porous form of the venting material of the layer of the venting material. In some embodiments, the first layer of flexible substrate and/or the second layer of flexible substrate may comprise a different material to the layer of venting material.

The or each intermediate layer may comprise a fluoropolymer. In embodiments where the layer of venting material comprises a fluoropolymer, the or each intermediate layer may comprise a fluoropolymer that is different to the fluoropolymer of the layer of venting material. The or each intermediate layers may comprise FEP, terpolymer of tetrafluoroethylene, hexafluoropropylene and vinylidene fluoride (THV) or perfluoroalkoxy alkane (PFA). For example, the or each intermediate layers may comprise FEP.

In embodiments where the vent material forms a pocket, the pocket may be formed by folding the laminate over itself to form the pocket. Accordingly, in embodiments comprising a first layer of flexible substrate and a second layer of flexible substrate, the first layer of flexible substrate may form the exterior of the pocket and the second layer of flexible substrate may form the interior of the pocket. The first layer of flexible substrate may connect the vent formed by the pocket into the seam. Accordingly, the first layer of flexible substrate may be configured to form a secure and sealed connection between the vent and the seam when the vent is installed within the seam of a closed container.

In embodiments comprising an intermediate layer, the intermediate layer may be configured to allow the layer of venting material to be connected more securely to a layer of the flexible substrate.

The layer of the flexible substrate may extend beyond the layer of venting material.

The opening of the pocket may open to the exterior of the closed container when the vent is installed within the seam of a closed container. The opening of the pocket may open to the interior of the closed container when the vent is installed within the seam of a closed container.

During use when the vent is installed within the seam of a closed container, gas generated within the closed container may pass through the vent material into the pocket and then pass through the opening of the pocket to the exterior of the closed container.

The length of the pocket may be configured to control the rate of diffusion or gas flow through the vent from the interior of the closed container to the exterior of the closed container when the vent is installed within the seam of a closed container. The length of the pocket extending into the interior of the closed container may be configured to control the rate of diffusion or gas flow through the vent from the interior of the closed container to the exterior of the closed container. Accordingly, a higher rate of diffusion or a higher rate of gas flow through the vent may be provided by a longer pocket to thereby provide a higher surface area of vent material exposed to the interior of the closed container. A lower rate of diffusion or a lower rate of gas flow through the vent may be provided by a shorter pocket to thereby provide a lower surface are of vent material exposed to the interior of the closed container.

The width of the pocket may be configured to control the rate of diffusion or gas flow through the vent from the interior of the closed container to the exterior of the closed container when the vent is installed within the seam of a closed container. The width of the pocket extending along the seam of the closed container may be configured to control the rate of diffusion or gas flow through the vent from the interior of the closed container to the exterior of the closed container. Accordingly, a higher rate of diffusion or a higher rate of gas flow through the vent may be provided by a wider pocket to thereby provide a higher surface area of vent material exposed to the interior of the closed container. A lower rate of diffusion or a lower rate of gas flow through the vent may be provided by a narrower pocket to thereby provide a lower surface area of vent material exposed to the interior of the closed container.

The vent material may comprise at least two connecting surfaces and the at least two connecting surfaces may comprise a first connecting surface on a first side of the vent material and a second connecting surface on a second side of the vent material, wherein the first side is an opposed side of the vent material to the second side. The at least two connecting surfaces may be configured to connect the vent material to the at least one container wall when the vent is installed within the seam of a closed container. Accordingly, the at least two connecting surfaces may secure the vent into the seam. The at least two connecting surfaces may seal the vent within the seam when the vent is installed within the seam of a closed container to ensure that the only pathway for gas to pass from the interior of the closed container to the exterior of the closed container is through the vent.

The first connecting surface may comprise an asymmetrical connection between the vent material and a first surface of the seam when the vent is installed within the seam of a closed container.

The second connecting surface may comprise an asymmetrical connection between the vent material and a second surface of the seam when the vent is installed within the seam of a closed container.

As used herein, the term "asymmetrical connection" refers to a connection that is provided on a surface that has at least one discontinuity in the connecting surface such that the connection is asymmetrical in at least one plane. For example, the connection may be asymmetrical in a plane dividing the front of the vent material (i.e. the portion of the vent material adjacent to the exterior of the closed container when the vent is installed within the seam of a closed container) from the back of the vent material (i.e. the portion of the vent material adjacent to the interior of the closed container when the vent is installed within the seam of a closed container).

The asymmetrical connection between the vent material and the second surface of the seam when the vent is installed within the seam of a closed container may partially overlap with the asymmetrical connection between the vent material and the first surface of the seam.

The first side of the vent material may comprise a non-connecting portion. Accordingly, there may be a portion of the first side of the vent material that is not connected to the at least one container wall when the vent is installed within the seam of a closed container. A first channel may be formed between the first side of the vent material and the at least one container wall. The first channel may correspond to the non-connecting portion of the first side of the vent material. The first channel may be bounded by the first connecting surface on at least one side. The first channel may be bounded by the first connecting surface on at least two sides. The first channel may be bounded by the first connecting surface on at least three sides.

The second side of the vent material may comprise a non-connecting portion. Accordingly, there may be a portion of the second side of the vent material that is not connected to the at least one container wall when the vent is installed within the seam of a closed container. A second channel may be formed between the second side of the vent material and the at least one container wall. The second channel may correspond to the non-connecting portion of the second side of the vent material. The second channel may be bounded by the second connecting surface on at least one side. The second channel may be bounded by the second connecting surface on at least two sides. The second channel may be bounded by the second connecting surface on at least three sides.

In embodiments where a first channel is formed between the first side of the vent material and the at least one container wall when the vent is installed within the seam of a closed container and a second channel is formed between the second side of the vent material and the at least one container wall, the first channel may extend from an opening adjacent to the exterior of the closed container towards the interior of the closed container. The second channel may extend from an opening adjacent to the interior of the closed container toward the exterior of the closed container.

The first connecting surface may be provided adjacent to the interior of the closed container when the vent is installed within the seam of a closed container. The non-connecting portion of the first side of the vent material may be provided adjacent to the exterior of the closed container.

The first connecting surface may be provided adjacent to the exterior of the closed container when the vent is installed within the seam of a closed container. The non-connecting surface of the first side of the vent material may be provided adjacent to the interior of the closed container.

The second connecting surface may be provided adjacent to the interior of the closed container when the vent is installed within the seam of a closed container. The non-connecting portion of the second side of the vent material may be provided adjacent to the exterior of the closed container.

The second connecting surface may be provided adjacent to the exterior of the closed container when the vent is installed within the seam of a closed container. The non-connecting surface of the second side of the vent material may be provided adjacent to the interior of the closed container.

The first connecting surface may comprise two side portions running along opposed edges and substantially extending from an edge of the first side of the vent material adjacent to the exterior of the closed container when the vent is installed within the seam of a closed container ("first exterior edge") to an edge of the vent material adjacent to the interior of the closed container ("first interior edge"). The first connecting surface may comprise a cross-portion that extends between the two side portions. The cross-portion may seal and separate the interior of the closed container from the exterior of the closed container. The cross-portion may be located adjacent to the first interior edge. The cross-portion may be located adjacent to the first exterior edge. Accordingly, the first connecting surface may form a "U-shape", for example. The cross-portion may be located part way between the first exterior edge and the first interior edge. The cross-portion may be located closer to the first interior edge than the first exterior edge. The cross-portion may be located closer to the first exterior edge than the first interior edge. The cross-portion may be located 90%, 80%, 70%, or 60% of the way from the first exterior edge to the first interior edge or values therebetween. The cross-portion may be located from 60% to 100% of the way from the first exterior edge to the first interior edge, wherein 100% of the way from the first exterior edge corresponds to being located at the first interior edge.

The second connecting surface may comprise two side portions running along opposed edges and substantially extending from and substantially extending from an edge of the second side of the vent material adjacent to the exterior of the closed container when the vent is installed within the seam of a closed container ("second exterior edge") to an edge of the second side of the vent material adjacent to the interior of the closed container ("second interior edge"). The second connecting surface may comprise a cross-portion that extends between the two side portions. The cross-portion may seal and separate the interior of the closed container from the exterior of the closed container. The cross-portion may be located adjacent to the second interior edge. The cross-portion may be located adjacent to the second exterior edge. Accordingly, the second connecting surface may form a "U-shape", for example. The cross-portion may be located part way between the second exterior edge and the second interior edge. The cross-portion may be located closer to the second interior edge than the second exterior edge. The cross-portion may be located closer to the second exterior edge than the second interior edge. The cross-portion may be located 90%, 80%, 70%, or 60% of the way from the second interior edge to the second exterior edge or values therebetween. The cross-portion may be located from 60% to 100% of the way from the second interior edge to the second exterior edge, wherein 100% of the way from the second interior edge corresponds to being located at the second exterior edge.

In some embodiments, the cross-portion of first connecting surface may be oriented in an opposite sense to the cross-portion of the second connecting surface. For example, the cross-portion of the first connecting surface may be provided adjacent to or at the first exterior edge and the cross-portion of the second connecting surface may be provided adjacent to or at the second interior edge.

The provision of a first channel and a second channel formed by a first connecting surface and a second connecting surface provides a greater surface area of the vent material that is available for gas to diffuse or flow into the vent material, whilst maintaining a seal within the seam between the vent material and the at least one container wall.

It has been found that the provision of a greater surface area of vent material that is available for gas diffusion within the vent within the seam of a closed container enhances the efficiency of the vent and allows the size of the vent to be minimised for a given required minimum rate of gas diffusion.

It has further been found that the provision of available surface area of vent material that is on a first side of the vent material and on the second side of the vent material increases the available pathways through the vent material that gas can take to pass from the interior of the closed container to the exterior of the closed container.

The first connecting surface may comprise adhesive and may adhere the vent material to the at least one container wall when the vent is installed within the seam of a closed container. The first connecting surface may comprise a welded surface that has welded the vent material to the at least one container wall when the vent is installed within the seam of a closed container. The first connecting surface may be a modified portion of the surface of the first side of the vent material that has been modified to change the properties of the first connecting surface. The first connecting surface may have a greater surface roughness than non-modified surfaces of the vent material. The first connecting surface may be more porous than non-modified surfaces of the vent material. The first connecting surface may be configured to be more readily adhered, welded or otherwise connected to the at least one container wall when the vent is installed within the seam of a closed container.

The second connecting surface may comprise adhesive and may adhere the vent material to the at least one container wall when the vent is installed within the seam of a closed container. The second connecting surface may comprise a welded surface that has welded the vent material to the at least one container wall when the vent is installed within the seam of a closed container. The second connecting surface may be a modified portion of the surface of the second side of the vent material that has been modified to change the properties of the second connecting surface. The second connecting surface may have a greater surface roughness than non-modified surfaces of the vent material. The second connecting surface may be more porous than non-modified surfaces of the vent material. The second connecting surface may be configured to be more readily adhered, welded or otherwise connected to the at least one container wall.

The first connecting surface may mirror the second connecting surface.

In some embodiments the vent may comprise a vent body. The vent body may comprise at least one opening. The vent body may comprise the at least one opening of the vent. The vent body may comprise at least one connecting surface to connect the vent to the at least one container wall in the seam when the vent is installed within the seam of a closed container. The vent body may house the vent material. Accordingly, the gas conduit may extend through the vent body.

The vent body may provide addition mechanical strength to the vent. The vent body may define the gas conduit. When the vent is installed within the seam of a closed container the vent body may comprise at least one interior opening adjacent to the interior of the closed container, and at least one exterior opening adjacent to the exterior of the closed container. Accordingly, gas may be required to pass through the at least one interior opening, through the vent material and through the at least one exterior opening.

The vent body may comprise a venting aperture. The venting aperture may correspond to one of the at least one opening of the vent body. The venting aperture may extend beyond the seam when the vent is installed within the seam of a closed container. The portion of the vent body comprising the venting aperture may extend beyond the seam. The portion of the vent body comprising the venting aperture may extend beyond the seam into the interior of the closed container. The portion of the vent body comprising the venting aperture may extend beyond the seam to the exterior of the closed container. The venting aperture may have a major plane. The venting aperture may be oblong, rectangular, or square in shape. The venting aperture may be curved. The venting aperture may be circular, or elliptical. The shape of the venting aperture may define the major plane of the venting aperture. The vent material may extend across the venting aperture. The vent material may span the venting aperture. For example, the vent material may be a vent membrane that extends across the venting aperture. The vent material may comprise a laminate material as described above.

The vent body may comprise a major plane. A portion of the vent body may comprise a major plane. The major plane of the vent body or portion of the vent body may coincide or be parallel with a major plane of the seam. The major plane of the venting aperture may be arranged within the major plane of the vent body or a plane parallel to the major plane of the vent body. The major plane of the venting aperture may be arranged substantially perpendicular to the major plane of the vent body. The major plane of the venting aperture may be arranged at an angle between the major plane of the vent body and perpendicular to the major plane of the vent body.

The vent body may comprise a connecting portion that connects the venting aperture to the portion of the vent body comprising the major plane. The gas conduit may extend from the at least one opening to the venting aperture via the portion of the vent body comprising the major plane and the connecting portion.

The at least one interior opening may be offset from the at least one exterior opening. The at least one interior opening may be offset from the at least one exterior opening in at least one dimension. The at least one interior opening may be offset from the at least one exterior opening in at least 2 dimensions. The at least one interior opening may be offset vertically from the at least one exterior opening. The at least one interior opening may be offset horizontally from the at least one exterior opening. The at least one interior opening may be offset vertically and horizontally from the at least one exterior opening. As used herein, the term "vertically" refers to the direction perpendicular to the major plane of the vent body. The term "horizontally" refers to a direction within the major plane of the vent body or within a plane that is parallel to the major plane of the vent body. Accordingly, when the vent is installed within the seam of a closed container gas passing through the vent may be required to change the direction of flow at least once from the at least one interior opening to the at least one exterior opening. The gas conduit from the at least one interior opening to the at least one exterior opening may require the direction of flow to change at least once. Accordingly, the vent may prevent a linear flow of gas through the vent material and thereby require the gas to pass through a higher volume of vent material.

The vent body may comprise a central portion, a first tapered portion and a second tapered portion. The central portion may be located between the first tapered portion and the second tapered portion. The first tapered portion may be configured to gradually reduce the thickness of the vent body away from the central portion. The second tapered portion may be configured to gradually reduce the thickness of the vent body away from the central portion. Accordingly, the vent body may be configured to allow a secure seal to be more readily formed within the seam between the vent body and the two portions of the at least one wall. The vent body may be retained more securely within the seam of the closed container when the vent is installed within the seam of a closed container and may facilitate a tighter seal between the at least one container wall and the vent within the seal and between both portions of the at least one container wall either side of the vent within the seam.

The first tapered portion and/or the second tapered portion may taper on one side. The first tapered portion and/or the second tapered portion may taper on two sides. The first tapered portion and/or the second tapered portion may taper on two opposed sides.

The vent material may be located between the at least one interior opening and the at least one exterior opening. The vent body may comprise a central cavity. The central cavity may be located between the at least one interior opening and the at least one exterior opening. The central cavity may connect the at least one interior opening to the at least one exterior opening. The vent material may span the central cavity. Accordingly, gas flowing or diffusing from the at least one interior opening to the at least one exterior opening may be forced to pass through the vent material within the central cavity.

In some embodiments, the vent may retained wholly within the seam when the vent is installed within the seam of a closed container such that the vent does not extend into the interior of the closed container and does not extend to the exterior of the closed container.

Features described in relation to the vent in the first aspect are features of the vent in the second aspect.

### Brief Description of the Figures

Embodiments of the present invention will now be described, by way of non-limiting example, with reference to the accompanying drawings.
**Figure 1**: A perspective view of a closed container comprising a vent according to a general embodiment;
**Figure 2**: A) A perspective section view and B) a cross section view of a closed container comprising a vent according to an embodiment;
**Figure 3**: A cross section of a five layer laminate used to form a vent according to an embodiment;
**Figure 4**: A top down view of a laminate used to form a vent according to an embodiment;
**Figure 5**: A perspective view of closed container comprising a vent according to an embodiment;
**Figure 6**: A plot of pressure vs time for example vents according to embodiments;
**Figure 7**: A chart of carbon dioxide permeability for vents according to embodiments;
**Figure 8**: A top view of a section of a closed container comprising a vent according to an embodiment;
**Figure 9**: A perspective view of vent material according to an embodiment;
**Figure 10**: A cross section view of a portion of a closed container comprising a vent according to an embodiment;
**Figure 11**: A perspective view of a vent according to an embodiment;
**Figure 12**: A perspective view of a vent according to an embodiment;
**Figure 13**: A perspective view of a vent according to an embodiment;
**Figure 14**: A front view of a vent according to an embodiment; and
**Figure 15**: A perspective view of a closed container including a vent according to an embodiment.

### Detailed Description

While the making and using of various embodiments of the present invention are discussed in detail below, it should be appreciated that the present invention provides many applicable inventive concepts that can be embodied in a wide variety of specific contexts. The specific embodiments discussed herein are merely illustrative of specific ways to make and use the invention and do not delimit the scope of the invention.

To facilitate the understanding of this invention, a number of terms are defined below. Terms defined herein have meanings as commonly understood by a person of ordinary skill in the areas relevant to the present invention. Terms such as "a", "an" and "the" are not intended to refer to only a singular entity, but include the general class of which a specific example may be used for illustration. The terminology herein is used to describe specific embodiments of the invention, but their usage does not delimit the invention, except as outlined in the claims.

### Example 1

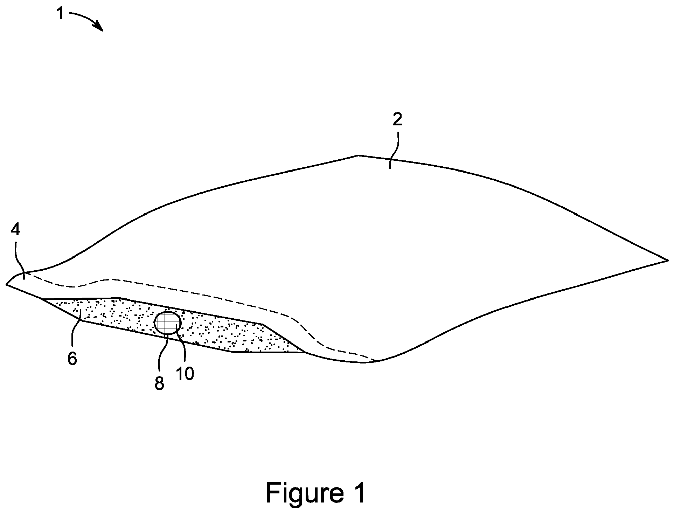

According to Figure 1, in a general example, a closed container 1 is provided comprising a flexible wall 2, and a seam 4 sealing the closed container 1 such that fluid cannot pass from the interior of the closed container 1 to the exterior of the closed container 1. A vent 6 is provided in the seam 4. The vent 6 includes a vent aperture 8 within which venting material 10 spans the vent aperture 8. A gas conduit is formed through the vent aperture such that gas may pass from the interior of the closed container to the exterior of the closed container through the vent aperture.

The vent 6 forms a sealing connection with the wall of the closed container 1 within the seam 4 to ensure that the only pathway from the interior of the closed container 1 and the exterior of the closed container 1 is through the vent 6.

### Example 2

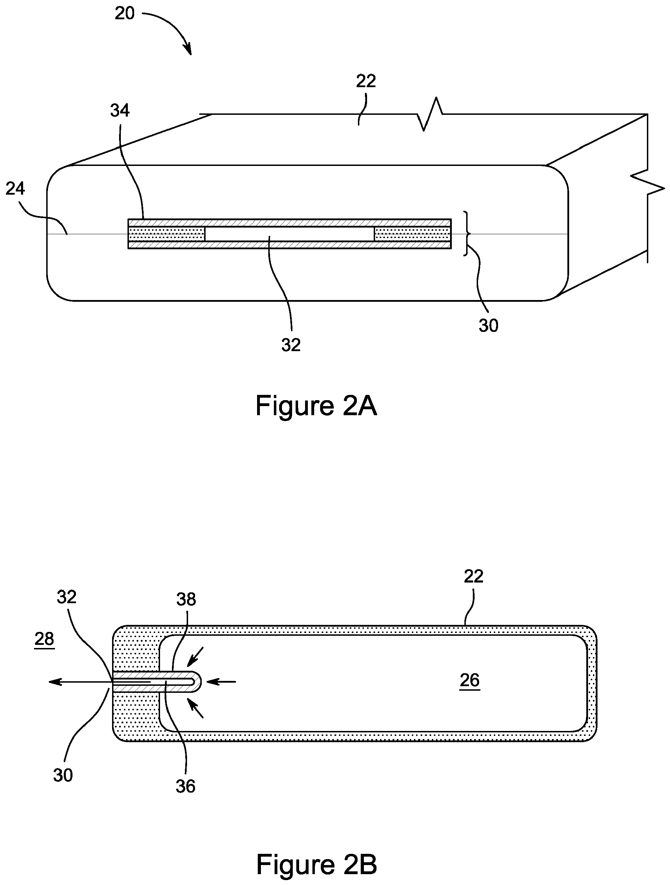

With reference to Figure 2A and 2B, a pouch 20 (acting as a closed container) comprises a flexible wall 22, and a seam 24 sealing the pouch 20 such that fluid may not pass from the interior 26 of the pouch 20 to the exterior 28 of the pouch 20. A vent 30 is provided within the seam 24. The vent 30 comprises an opening 32 and is formed from a laminate material 34 that is folded over upon itself to form a pocket 36 (see Figure 2B for example). The opening 32 faces the exterior 28 of the pouch 20 and the folded end 38 of the vent 30 extends into the interior 26 of the pouch 20. The vent 30 does not extend beyond the seam 24 to the exterior 28 of the pouch 20 and does extend from the seam 24 into the exterior 28 of the pouch 20.

During use, gas may pass from the interior 26 of the pouch 20 through the laminate material 34 into the pocket of the vent 30 and out of the opening 32 to the exterior 28 of the pouch 20.

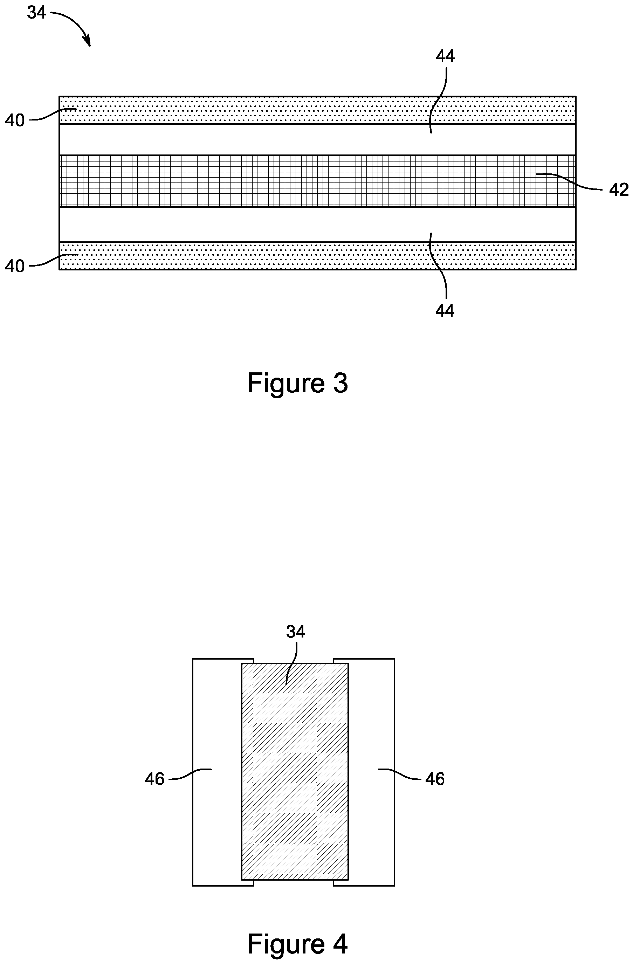

The vent 30 is formed by preparing a five-layer laminate material 34 (see Figure 3) comprising outer layers 40 of ePTFE membrane ("40F Prism" membrane), a dense film 42 of dense PTFE film ("DM18C") in the middle with a fluorinated ethylene propylene (FEP) intermediate layer 44 between the dense film 42 and each of the outer layers 40. A polypropylene (PP) film 46 extends either side of the laminate material 34 to form a vent composite (see Figure 4). The vent composite is then folded over upon itself such that the laminate material 34 is folded over itself and the PP film 46 folds over itself. A piece of poly (4,4'-oxydiphenylene-pyromellitimide) film (Kapton (R)) (acting as a protective element) is then placed within the folded composite between the folded laminate material such that it is spaced apart form the edges of the laminate material. The vent composite is then thermally welded at a temperature of 250°C and a force of 100N such that the sides of the laminate material is welded to itself in those areas that are not protected by the Kapton (R). Accordingly, the pocket 36 is formed by the laminate material 34 bounded by the welded sides 48 and the fold. The piece of Kapton (R) is then removed.

The so formed vent 30 is placed between the walls of the pouch 20 that are to be sealed to form the seam 24 and the seam 24 is then formed around the vent 30. The PP film either side of the folded laminate material 34 provides a secure connection between the walls of the pouch 20.

It will be appreciated that the rate of diffusion of gas through the vent 30 may be configured by adjusting the width and/or length of the pocket 36 of the vent 30.

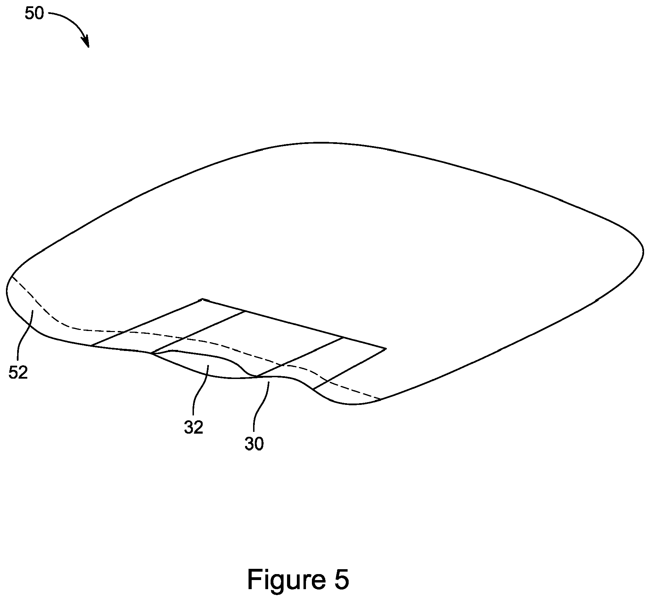

A further example of a closed container 50 comprising the vent 30 within a seam 52 is shown in Figure 5.

### Pressure test:

The ability of a closed container comprising a vent in the seam according to Example 2 to be a substantially gas tight closed container was tested as described below:

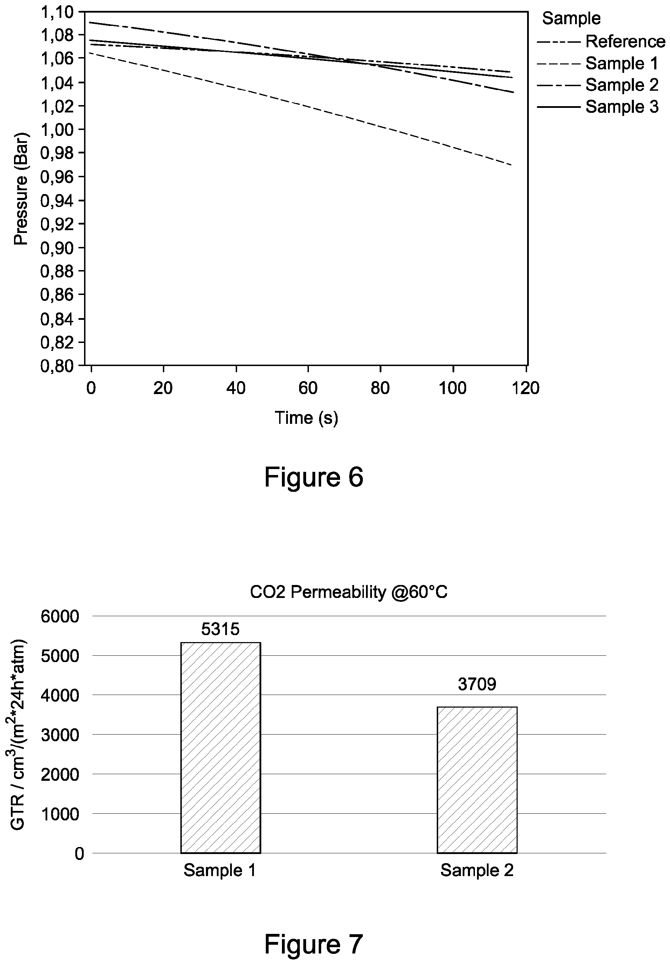

A pressure (He-gas) of around 1 bar was applied to the closed container. The starting pressure at 60°C was measured and the pressure over a period of 2 hours was measured while the temperature and pressure were maintained. Three samples according to example 2 were tested and compared to a non-vented pouch. The pressure over time within the pouch for each sample is shown in Figure 6. A pressure drop of less than 0.05 bar over the time period was determined as a pass. One sample was observed to fail and this was determined to be due to insufficient sealing of the seam, not the failure of the vent itself.

*CO₂ Permeability test:* The CO₂ permeability of the vent of Example 2 was measured to determine the amount of CO₂ that can diffuse through the vent and the results for two samples is shown in Figure 7. Accordingly, both samples were determined have good CO₂ permeability.

### Example 3

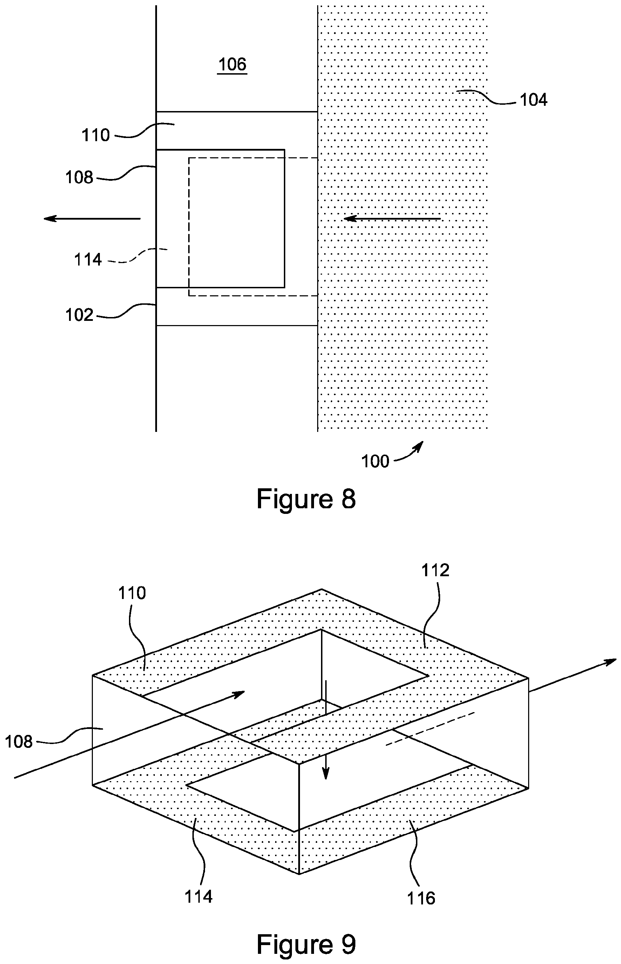

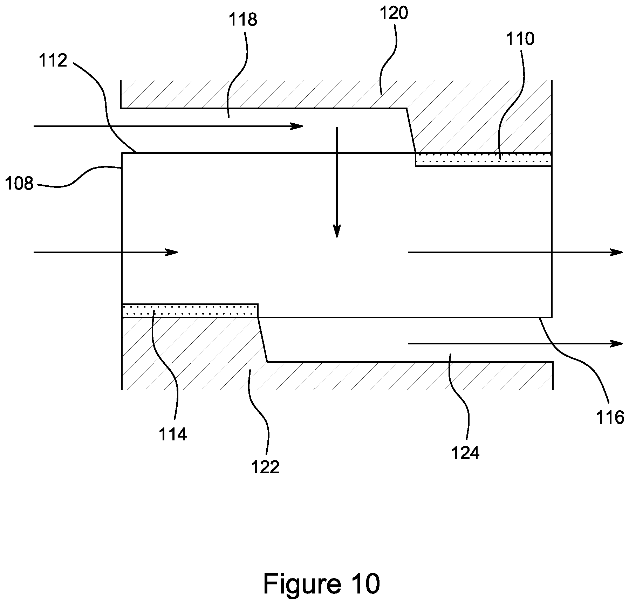

With reference to Figures 8 to 10, a closed container 100 comprises a vent 102, a flexible wall 104 and a seam 106. The vent 102 is sealed within the seam 106. The vent 102 comprises a densified expanded polytetrafluoroethylene (ePTFE) substrate 108 (acting as a vent material) with a first U-shaped connecting surface 110 (acting as a first connecting surface) on a first side 112 and a second U-shaped connecting surface 114 (acting as a second connecting surface) on a second side 116 opposed to the first side 112. In Figure 8 the first and second U-shaped connecting surfaces 110, 114 are shown offset from one another for illustrative purposes. The first U-shaped connecting surface connects the ePTFE substrate 108 to a first portion 120 of the flexible wall 104 and the second U-shaped connecting surface connects the ePTFE substrate 108 to a second portion 122 of the flexible wall 104. The first U-shaped connecting surface 110 is oriented such that a first opening 118 is formed between the first portion 120 of the flexible wall 104 and the ePTFE substrate 108. The first opening 118 is defined on three sides by the first U-shaped connecting surface 110 and opens to the exterior of the closed container 100. The second U-shaped connecting surface 114 is oriented such that a second opening 124 is formed between the second portion 122 of the flexible wall 104 and the ePTFE substrate 108. The second opening 124 is defined on three sides by the second U-shaped connecting surface 114 and opens to the interior of the closed container 100.

The first U-shaped connecting surface 110 is formed by the provision of adhesive of the first side 112 such that the first portion 120 of the flexible wall 104 connects more securely with the first U-shaped connecting surface 110 and less securely to the remainder of the first side 112 that does not have adhesive.

The second U-shaped connecting surface 114 is formed by the provision of adhesive of the second side 116 such that the second portion 122 of the flexible wall 104 connects more securely with the second U-shaped connecting surface 114 and less securely to the remainder of the second side 116 that does not have adhesive.

During use, gas may enter the ePTFE substrate 108 on two faces of the ePTFE substrate 108: the face of the ePTFE substrate 108 adjacent to the interior of the closed container, and the portion of the first side 112 that is not part of the first U-shaped connecting surface 110. The gas may then pass through the ePTFE substrate 108 and exit the ePTFE substrate 108 to the exterior of the closed container via two further faces of the ePTFE substrate 108: the face of the ePTFE substrate 108 adjacent to the exterior of the closed container 100, and the portion of the second side 116 that is not part of the second U-shaped connecting surface 114. Accordingly, the use of the first U-shaped connecting surface 110 and the second U-shaped connecting surface 114 provides more potential pathways for gas to travel through the ePTFE substrate 108 than an alternative example where the first side and second side of the ePTFE substrate 108 are fully connected to the flexible wall 104 of the closed container 100. Therefore, the rate of diffusion through the ePTFE substrate 108 is increased for the present example in comparison to the alternative example, and as a result the vent of the present example may be smaller than the alternative example and yet achieve a comparable performance.

### Example 4

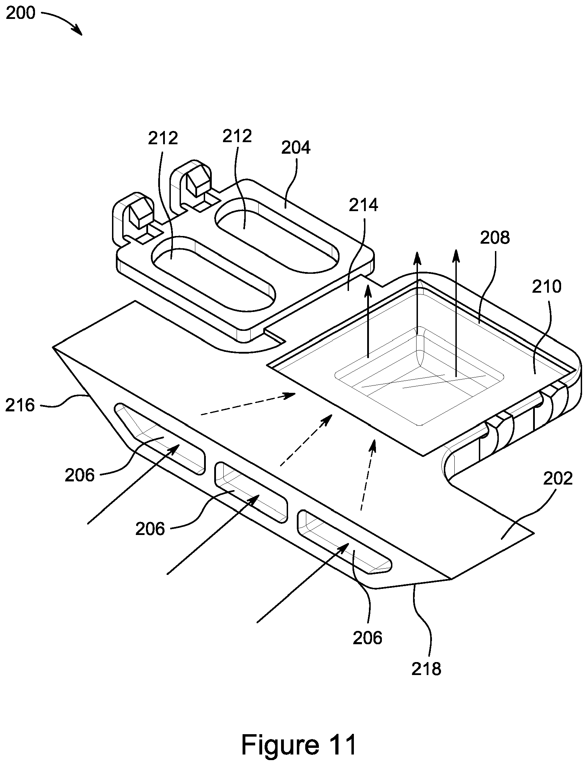

With reference to Figure 11, a vent 200 comprises a vent body 202 and a vent aperture cover 204. The vent body 202 comprises three openings 206 (acting as at least one opening) and a vent aperture 208. The vent aperture 208 comprises a vent membrane 210 (acting as vent material) and is extends in the plane of the vent body 202 such that gas passing out or into the vent aperture 208 is generally travelling at 90 degrees to gas entering or exiting the three openings 206 (see direction of arrows in Figure 11, for example). The vent aperture cover 204 comprises two cover apertures 212 and is connected to the vent body by hinge 214 and is configured to cover the vent aperture in a closed configuration and to open by pivoting about the hinge 214 to an open configuration (shown in Figure 11) in which the vent membrane 210 is fully exposed and the vent membrane 210 can be replaced if required. A gas conduit extends through the vent 200 from the cover apertures 212, through the vent membrane 210, through the vent body 202 to the three openings 206.

The vent body 202 comprises angled faces 216, 218 that allow the vent 202 to be more readily sealed within a seam of a closed container such as a battery pouch, for example (not shown).

The vent 200 is installed within the seam of a battery pouch (not shown) such that the vent aperture extends out from the seam of the battery pouch to the exterior of the battery pouch. Accordingly, gas within the battery pouch that may be generated during use may pass through the openings 206, through the vent membrane 210 and out of the cover apertures 212 to the exterior of the battery pouch.

### Example 5

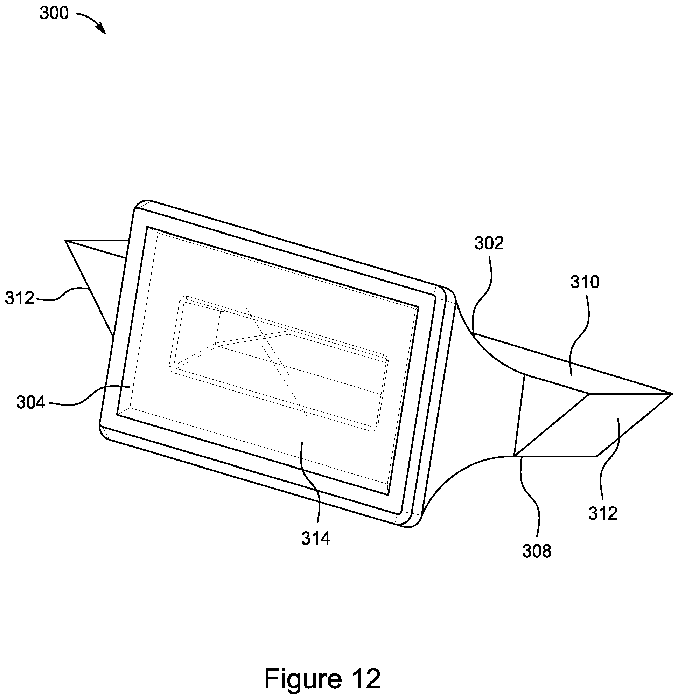

With reference to Figure 12 a vent 300 comprises a vent body 302. The vent body 302 comprises a vent aperture 304 and an opening 306. The vent body 302 further comprises sealing surfaces 308, 310 that are configured to contact the vent body 302 to the surfaces of a seam of a closed container (not shown). The sealing surfaces 308, 310 comprise angled portions 312 that allow the vent to be more readily sealed within the seam of a closed container. The vent aperture 304 extends generally perpendicular to the plane of the sealing surfaces 308, 310. An ePTFE membrane 314 (acting as vent material) occludes the vent aperture 304. A linear pathway through the vent 300 is formed by the vent aperture 304 and opening 306 such that when the vent is sealed within a seam of a closed container, gas generated within the closed container may pass directly through the vent via the opening 306 and vent aperture 304 through the ePTFE membrane 314.

The vent 300 is installed within a closed container (not shown) such that the vent aperture 304 extends from the seam of the closed container into the exterior of the closed container. Accordingly, gas within the closed container that may be generated during use may pass through the opening 306, through the ePTFE membrane 314 and out of the opening 306 to the exterior of the closed container.

### Example 6

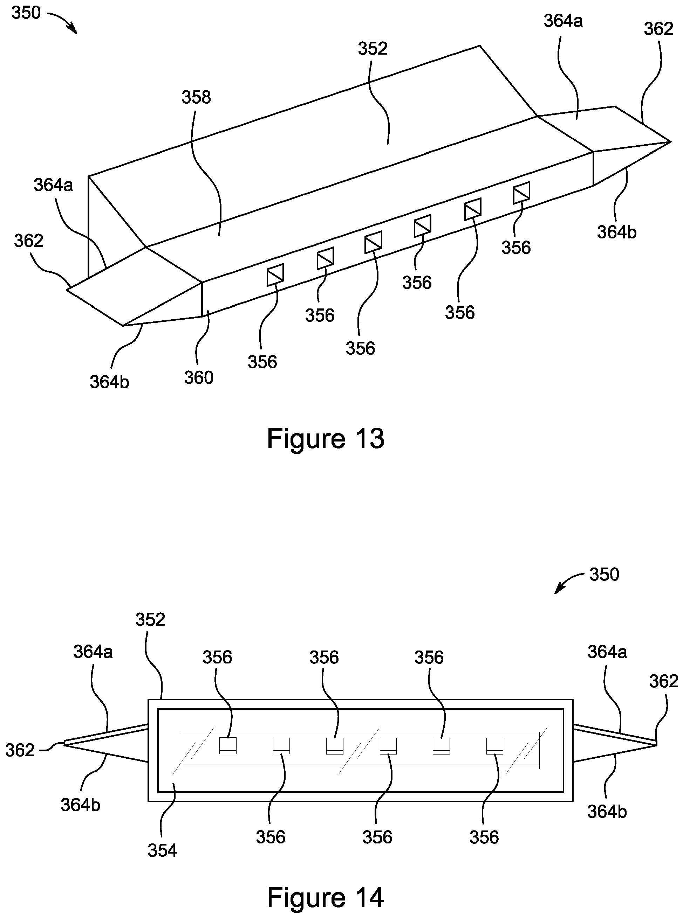

With reference to Figures 13-14 a vent 350 comprises a vent body 352. The vent body 352 comprises a vent aperture 354 and six openings 356. The vent body 352 further comprises sealing surfaces 358, 360 that are configured to contact the vent body 352 to the surfaces of a seam of a closed container (not shown). The sealing surfaces 358, 360 comprise angled portions 362 that comprise two angled surfaces 364a, 364b that allow the vent to be more readily sealed within the seam of a closed container. The vent aperture 354 extends generally perpendicular to the plane of the sealing surfaces 358, 360. An ePTFE membrane 366 (acting as vent material) occludes the vent aperture 354. A linear pathway through the vent 350 is formed by the vent aperture 354 and opening 356 such that when the vent is sealed within a seam of a closed container, gas generated within the closed container may pass directly through the vent via the opening 356 and vent aperture 354 through the ePTFE membrane 366.

The vent 350 is installed within a closed container (not shown) such that the vent aperture 354 extends from the seam of the closed container into the exterior of the closed container. Accordingly, gas within the closed container that may be generated during use may pass through the opening 356, through the ePTFE membrane 364 and out of the opening 356 to the exterior of the closed container.

### Example 7

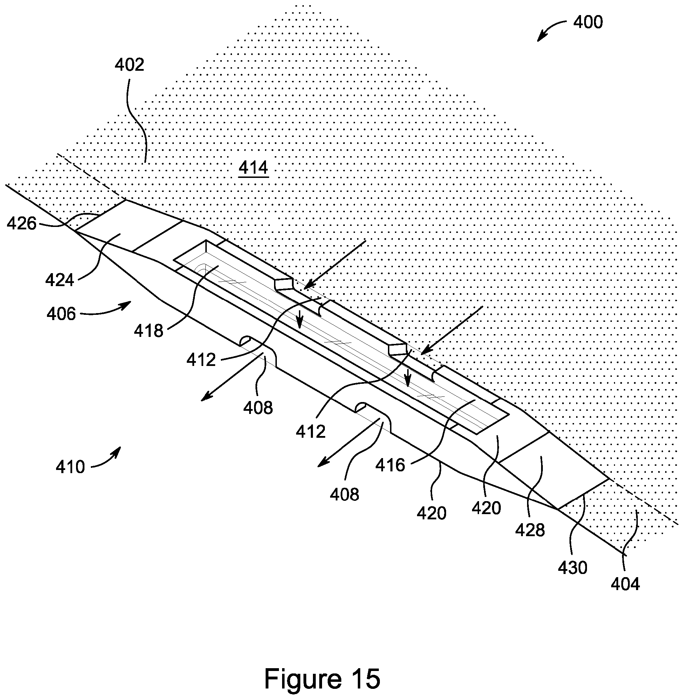

With reference to Figure 15 a battery pouch 400 comprises a flexible wall 402 and a seam 404. A vent 406 is sealed within the seam 404 and comprises a body 406, the body 406 comprising two exterior openings 408 adjacent to the exterior 410 of the battery pouch 400 and two interior openings 412 adjacent to the interior 414 of the battery pouch 400. The body 406 comprises an internal cavity 416 in fluid communication with the openings 408, 412 such that a gas conduit extends from the interior 414 of the battery pouch 400 to the exterior 410 of the battery pouch 400 via the two interior openings 412 adjacent to the interior 414 of the battery pouch 400 to the internal cavity 416 to the two exterior openings 408 adjacent to the exterior 410 of the battery pouch 400. The internal cavity 416 comprises a laminate material 418 that spans the internal cavity 416 such that gas passing through the body 406 passes through the laminate material 418. The laminate material 418 comprises a layer of dense ePTFE (acting as a layer of venting material), a layer of FEP (acting as an intermediate layer) and a layer of ePTFE (acting as a first intermediate layer).

The body 406 comprises a seam contacting surface 420 on two opposed sides of the body 406. The seam contacting surface 420 contacts portions of the flexible wall 422 that are sealed together to form the seam 404 such that the vent 406 is sealed within the seam 404. The seam contacting surface 420 comprises a first tapered portion 424 at a first end 426 of the body 406 and a second tapered portion 428 at a second end 430 of the body 406, the second end 430 being at an end opposed to the first end 426 of the body 406.

The two exterior openings 408 are offset from the two interior openings 412 such that the laminate material 418 is located between the two exterior openings 408 and the two interior openings 412.

The body 406 is dimensioned such that the vent 406 is retained entirely within the seam 404 and does not extend into the interior 414 of the battery pouch 400 and does not extend into the exterior 410 of the battery pouch 400.

It will be appreciated that the features of the examples above are merely illustrative of the inventive concept and the vents described above may be used in any closed container, whether that be a closed container comprising a flexible wall such as a battery pouch, or comprising a rigid wall where the vent is recessed into the rigid wall within the seam.

Further, it will be appreciated that the specific number of openings of a vent as described in the examples above may be varied to optimize the rate of gas diffusion through the vent as required by any given application.

While there has been hereinbefore described approved embodiments of the present invention, it will be readily apparent that many and various changes and modifications in form, design, structure and arrangement of parts may be made for other embodiments without departing from the invention and it will be understood that all such changes and modifications are contemplated as embodiments as a part of the present invention as defined in the appended claims.

## Claims

1. A closed container comprising at least one container wall, a seam connecting two edges of the at least one container wall and a vent, wherein at least a portion of the seam is formed around the vent.

2. The closed container according to claim 1, wherein the at least one container wall is a flexible container wall.

3. The closed container according to claim 2, wherein the closed container is a pouch.

4. The closed container according to any preceding claim, wherein the vent comprises a vent material, at least one opening and at least one connecting surface that connects the vent within the seam, wherein the opening and vent material form a gas conduit such that during use gas passes from the interior of the closed container to the exterior of the closed container through the gas conduit.

5. The closed container according to claim 4, wherein vent material comprises a dense polymer material.

6. The closed container according to claim 4 or 5, wherein the vent material forms a pocket and an opening of the at least one opening is an opening of the pocket such that the gas conduit extends from the opening through the vent material via the pocket.

7. The closed container according to claim 6, wherein the pocket extends into the closed container from the seam.

8. The closed container according to claim 4, wherein the vent material comprises at least two connecting surfaces and the at least two connecting surfaces comprise a first connecting surface on a first side of the vent material and a second connecting surface on a second side of the vent material, wherein the first side is an opposed side of the vent material to the second side.

9. The closed container according to claim 8, wherein the first connecting surface comprises an asymmetrical connection between the vent material and a first surface of the seam and the second connecting surface comprises an asymmetrical connection between the vent material and a second surface of the seam.

10. The closed container according to claim 9, wherein the asymmetrical connection between the vent material and the second surface of the seam partially overlaps with the asymmetrical connection between the vent material and the first surface of the seam.

11. The closed container according to claim 10, wherein a first channel is formed between the vent material and the first surface of the seam and defined by the first connecting surface and a second channel is formed between the vent material and the second surface of the closed container and defined by the second connecting surface.

12. The closed container according to claim 10 or claim 11, wherein the first connecting surface forms a U-shape on the first side of the vent material and the second connecting surface forms a U-shape on the second side of the vent material and the orientation of the U-shape on the first side is opposed to the orientation of the U-shape on the second side.

13. The closed container according to claim 4, wherein the vent comprises a vent body and the vent body comprises the at least one opening.

14. The closed container according to claim 13, wherein the vent body comprises a venting aperture and the vent material is a vent membrane that extends across the venting aperture.

15. The closed container according to claim 13 or claim 14, wherein the seam comprises a major plane and the venting aperture is arranged within the major plane of the seam, or wherein the seam comprises a major plane and the venting aperture is arranged substantially perpendicular to the major plane of the vent body.

16. A vent comprising a vent material, at least one opening and at least one connecting surface, wherein the vent is configured to be mounted within the seam of a closed container having an interior and an exterior such that the at least one opening is adjacent to the exterior of the closed container and the at least one connecting surface is configured to connect the vent into the seam, wherein the at least one opening and vent material form a gas conduit such that during use when the vent is installed within the seam of a closed container gas passes from the interior of the closed container to the exterior of the closed container through the gas conduit.
